# EUROPEAN PATENT APPLICATION

(11) **EP 0 882 902 A1**
(43) Date of publication of application: **09.12.1998**
(21) Application number: 97109159.0
(22) Date of filing: 06.06.1997
(51) Int. Cl.: F16D 13/58

(54) **Anti-vibration device for a friction clutch diaphragm**

(71) Applicant: Ford-Werke Aktiengesellschaft, 50735 Köln (DE)
(72) Inventor: Kelly, Patrick, 50939 Köln (DE)
(74) Representative: Ritzkowsky, Harald, Dipl.-Ing.

(57) **Abstract**

The Invention relates to a friction clutch (1) comprising a cover (6), a pressure plate (4) which is connected rotationally secured but axially displacable to a limited extent to the cover (6), a plate diaphragm spring (5) axially clamped between the cover (6) and the pressure plate (4), which spring produces a contact pressure force and can pivot on the cover (6) to bias the pressure plate (4) in the direction of a clutch disc (3) which can be clamped between the pressure plate (4) and a counter pressure plate (2) and means (7) to bias the spring plate (5) and the pressure plate (4) in the clutch disengagement process.

## Description

The invention relates to a friction clutch, more particularly for motor vehicles, with a pressure plate which is connected rotationally secured but axially displaceable to a limited extent to a cover wherein between the cover and the pressure plate there is an axially tensioned contact pressure plate diaphragm spring which on one side can pivot on the cover and on the other side biases the pressure plate in the direction of a clutch disc which can be clamped between this pressure plate and a counter pressure plate, such as a flywheel.

Even with automatic adjustment devices which are to cause a practically constant force biasing of the pressure plate through the contact pressure plate spring and which are known for example from DE-OS 29 16 755 and 35 18 781, probably due to the relatively large mass of the clutch disc and pressure plate which can vibrate axially during engagement and disengagement of the clutch, a relatively strong vibration can result in the power train by which the function of the clutch may be impaired. The resulting vibrations can lead to an unpleasant vibration at the clutch pedal.

The object of the present invention is to remove these vibrations which explicitely are a concern with diesel engines, by a simple construction and a reliably safe function even during rough operation, which furthermore requires a small installation space and which is economical to produce. Furthermore the effect on the disengagement forces required should be slight, remain slight throughout the service life and the service life of the friction clutches should be further increased.

According to the invention there is provided a friction clutch comprising a cover, a pressure plate which is connected rotationally secured but axially displaceable to a limited extent to the cover, a plate diaphragm spring axially clamped between the cover ad the pressure plate, which spring produces a contact pressure force and can pivot on the cover to bias the pressure plate in the direction of a clutch disc which can be clamped between the pressure plate and a counter pressure plate ad means to bias the spring plate in the clutch disengagement process.

A preferred construction of said means to bias the spring plate and the pressure plate in the clutch disengagement process comprise a spring assembly which either acts directly or indirectly on the plate diaphragm spring and the pressure plate. The spring assembly may include one or more springs with appropriate fastening means and especially the springs may be appropriately located relative to the pressure plate and the plate spring.

In a more preferred construction the spring assembly forms at least one surface of contact to the plate diaphragm spring near its outer edge area and at a surface which is not adjacent the pressure plate and includes at least one spring element. Thus the spring element contacts the plate spring either at the plate spring's surface which is adjacent the cover or at a surface defining the plate spring thickness.

In an even more preferred construction the spring assembly includes several spring elements which are circumferentially spaced. For clarification, without limiting the scope claimed, it may be envisaged, that a spring assembly consists of three especially separate spring elements which are circumferentially equally spaced.

In a specifically preferred construction a spring element essentially consists of a leaf spring which are at one end fixed to the cover and which are bent in order to form a surface of contact to the plate springs suface which is adjacent the cover. For clarification, without limiting the scope claimed, it may be envisaged that the leaf springs are fixed under the bolts used to fix the cover and the flywheel and have a generally elongate S-like length-section.

In an even more specifically preferred design a spring element essentially consists of a leaf spring clip of generally U-like length-section.

While the spring assembly which has been described so far may be looked at as a separate assembly, it may be understood that it could also form an intergal part of either the plate spring and/or the pressure plate and/or the cover and for any other part of the clutch. In a preferred construction the plate spring has a ring-like resilient foundation body and which serves as a first surface area of contact to the pressure plate, tongues running radially inwards from same and forming operating means and the outer edge area at least partially bent to form additionally to the first surface area of contact to the pressure plate a second surface area of contact at the outer edge area of the ring-like resilient foundation body.

As with the earlier described embodiment the second surface area of contact may establish biasing contact either directly to the pressure plate or indirectly to e.g. the cover. Using appropriate dimensions for the plate spring close to the second surface area of contact, sufficient force on the pressure plate to reduce vibrations can be exerted without impairing the general function of the plate spring.

In a specific construction the plate spring at its outer edge area has a second surface area of contact with the cover.

In a more specific design the plate spring at its outer edge area has a second surface area of contact with the pressure plate, thereby biasing plate spring and pressure plate directly during disengagement process.

In a specifically preferred design the second surface area of contact comprise a plurality of circumferentially spaced sections extending at least partially radially outwards from the ring-like resilient foundation body.

The basic principles of one embodiment of the invention is described with reference to the schematic representation of a design using leaf springs as means for biasing the pressure plate and the plate spring.

The friction clutch 1 with flywheel 2, clutch disc 3, pressure plate 4, plate diaphragm spring 5 and cover 6 with a bearing 61 according to the invention includes an anti vibration spring 7 which is fixed under one of screws fastening the cover 6 and the flywheel 2. The anti vibration spring 7 has a length-section of generally elongate S-like form and makes direct contact to the surface of the plate spring 5 which is adjacent the cover 6 at a surface of contact area 57.

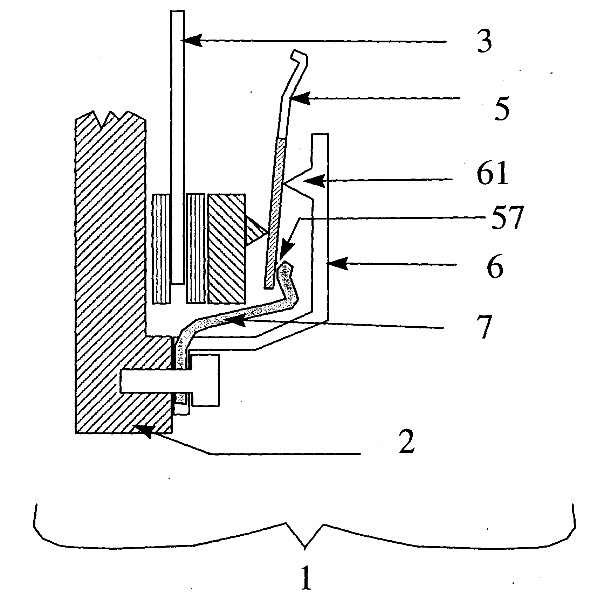

## Claims

1. A friction clutch comprising a cover, a pressure plate which is connected rotationally secured but axially displacable to a limited extent to the cover, a plate diaphragm spring axially clamped between the cover and the pressure plate, which spring produces a contact pressure force and can pivot on the cover to bias the pressure plate in the direction of a clutch disc which can be clamped between the pressure plate and a counter pressure plate and means to bias the spring plate and the pressure plate in the clutch disengagement process.

2. A friction clutch according to claim 1 characterised in that, said means to bias the spring plate and the pressure plate in the clutch disengagement process comprise a spring assembly which either acts directly or indirectly on the plate diphragm spring and the pressure plate.

3. A friction clutch according to claim 2 characterised in that, the spring assembly forms at least one surface of contact to the plate diaphragm spring at its outer edge area at a surface which is not adjacent the pressure plate and includes at least one spring element.

4. A friction clutch according to claim 3 characterised in that, the spring assembly includes several spring elements which are circumferentially spaced.

5. A friction clutch according to claim 4 characterised in that, a spring element essentially consist of leaf a spring which is at one end fixed to the cover and which is bent in order to form a surface of contact to the plate springs suface which is adjacent the cover.

6. A friction clutch according to claim 4 characterised in that, the spring elements essentially consist of leaf spring clips of generally U-like length-section.

7. A friction clutch according to claim 2 characterised in that, the plate daiphragm spring has a ring-like resilient foundation body, tongues running radially inwards from same and forming operating means and the outer edge area is at least partially bent to form additionally to the first surface area of contact to the pressure plate a second surface area of contact at the outer edge area of the ring-like resilient foundation body.

8. A friction clutch according to claim 7 characterised in that, the plate spring at its outer edge area has a second surface area of contact with the cover.

9. A friction clutch according to claim 7 characterised in that, the plate spring at its outer edge area has a second surface area of contact with the pressure plate.

10. A friction clutch according to one of claims 7 to 9 characterised in that, the second surface area essentially consists of a plurality of circumferentially spaced sections.
